# EUROPEAN PATENT SPECIFICATION

(11) **EP 3 161 084 B1**
(45) Date of publication and mention of the grant of the patent: **26.02.2020**
(21) Application number: 15795039.5
(22) Date of filing: 12.06.2015
(51) Int. Cl.: C09J 4/00, C08F 220/10

(54) **ADHESIVE PRECURSOR COMPOSITION, TWO-PART ADHESIVE KIT, AND METHOD OF MAKING AN ADHESIVE COMPOSITION**
KLEBSTOFFVORLÄUFERZUSAMMENSETZUNG, ZWEITEILIGES KLEBSTOFF-KIT UND VERFAHREN ZUR HERSTELLUNG EINER KLEBSTOFFZUSAMMENSETZUNG
COMPOSITION ADHÉSIVE DE PRÉCURSEUR, KIT ADHÉSIF À DEUX PARTIES, ET PROCÉDÉ DE PRÉPARATION DE COMPOSITION ADHÉSIVE

(30) Priority: 24.06.2014 US 201462016321 P
(43) Date of publication of application: 03.05.2017
(73) Proprietor: 3M Innovative Properties Company, St. Paul, MN 55133-3427 (US)
(72) Inventor: THOMPSON, Zachary J., Saint Paul, Minnesota 55133-3427 (US); KASAHARA, Takahiro, Tokyo 141-8684 (JP)
(74) Representative: Mathys & Squire
(86) International application number: PCT/US2015/035530
(87) International publication number: WO 2015/200007

(56) References cited:
- EP-A1- 2 492 329
- WO-A1-2013/126377
- US-A- 4 103 081
- US-B1- 6 383 272

## Description

### FIELD

The present disclosure broadly relates to acrylic adhesives and compositions and methods useful for their preparation.

### BACKGROUND

Acrylic adhesives have been commercially used for more than 50 years. These adhesives, typically based on acrylates and/or methacrylates, are supplied as two separate components (often termed part A and part B) that can be mixed prior to application to two adherends to form an adhesive bond, or each component can be applied to separate adherend surfaces which are then joined. Typically, both parts A and B contain free-radically polymerizable monomers,

One type of acrylic adhesive, described in WIPO International Publ. No. WO 2013/126377 A1 (Kropp et al.), uses a cure system including a barbituric acid and/or a malonyl sulfamide and organic peroxide, optionally combined with a quaternary ammonium chloride salt and/or certain metal salt(s). EP 2 492 329 discloses a two- or multi-component composition comprising at least one (meth)acrylate and at least one dicarbonyl compound.

### SUMMARY

To avoid premature curing, acrylic adhesives of the general type reported in WO 2013/126377 A1 (Kropp et al.) can be formulated as a two-part (i.e., part A and part B) kit. Part A contains organic peroxide and a beta-dicarbonyl compound, while part B contains a quaternary ammonium chloride salt and/or certain metal salt(s). Ordinarily, part B further includes a free-radically polymerizable monomer. To facilitate handling and mixing, part A desirably also contains a free-radically polymerizable diluent. However, premature curing of the part A component (e.g., resulting in unacceptably shortened shelf-life) may result in this circumstance. It would be desirable to improve the shelf-life of the part A component, preferably without adversely affecting cure of the adhesive when parts A and B are combined.

Advantageously, the present inventors have discovered that inclusion of aromatic nitro compounds can effectively increase the shelf-life of part A compositions containing beta-dicarbonyl compounds according to the present disclosure.

Accordingly, in one aspect, the present disclosure provides an adhesive precursor composition comprising:
at least one free-radically polymerizable compound;
a beta-dicarbonyl compound represented by the formula 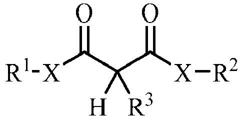 or a salt thereof, wherein:
   R¹ and R² independently represent hydrocarbyl or substituted-hydrocarbyl group having from 1 to 18 carbon atoms;
   R³ represents hydrogen, or a hydrocarbyl or substituted-hydrocarbyl group having from 1 to 18 carbon atoms; and
   each X independently represents O, S, 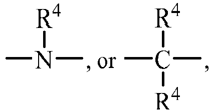
   wherein each R⁴ independently represents H or hydrocarbyl having from 1 to 18 carbon atoms, or taken together any two of R¹, R², R³, or R⁴ form a ring; and
2-nitrobenzoic acid.

In another aspect, the present disclosure provides a two-part adhesive kit comprising: a part A composition comprising:
i) at least one free-radically polymerizable compound;
ii) a beta-dicarbonyl compound represented by the formula 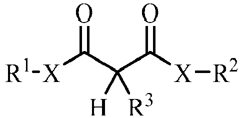 or a salt thereof, wherein:
   R¹ and R² independently represent hydrocarbyl or substituted-hydrocarbyl group having from 1 to 18 carbon atoms;
   R³ represents hydrogen, or a hydrocarbyl or substituted-hydrocarbyl group having from 1 to 18 carbon atoms; and
   each X independently represents O, S, 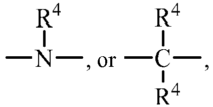 wherein each R⁴ independently represents H or hydrocarbyl having from 1 to 18 carbon atoms, or taken together any two of R¹, R², R³, or R⁴ form a ring; and
iii) 2-nitrobenzoic acid,
   and
ii) a part B composition comprising:
   at least one free-radically polymerizable compound,
   a salt or oxide of a polyvalent metal, and
   a non-metallic halide salt.

In yet another aspect, the present disclosure provides a method of making an adhesive composition, the method comprising combining the part A and part B compositions of a two-part adhesive kit according to the present disclosure.

As used herein, the prefix "(meth)acryl" refers to acryl and/or methacryl. For example, (meth)acrylate refers to acrylate and/or methacrylate.

As used herein, the term "hydrocarbyl" refers to a monovalent group derived from a hydrocarbon. Examples include methyl, phenyl, and methylcyclohexyl.

As used herein, the term "hydrocarbylene" refers to a divalent group derived from a hydrocarbon. Examples include methylene, phenylene, and 1,3-propane-diyl.

Features and advantages of the present disclosure will be further understood upon consideration of the detailed description as well as the appended claims.

### DETAILED DESCRIPTION

Adhesive precursor compositions according to the present disclosure (corresponding to part A in two-part adhesive kits according to the present disclosure) include at least one free-radically polymerizable compound and a beta-dicarbonyl compound as described above.

Suitable free-radically polymerizable compounds include, for example, at least one of (meth)acrylates, (meth)acrylamides, other vinyl compounds, and combinations thereof. Useful free-radically polymerizable compounds may comprise an ethylenically-unsaturated compound having one or more (e.g., one, two, three, four, or more) free-radically polymerizable groups.

Examples of suitable (meth)acrylates include mono-, di-, and poly-(meth)acrylates and (meth)acrylamides such as, for example, 1,2,4-butanetriol tri(meth)acrylate, 1,3-butylene glycol di(meth)acrylate, 1,3-propanediol di(meth)acrylate, 1,4-butanediol di(meth)acrylate, 1,4-cyclohexanediol di(meth)acrylate, 1,6-hexanediol di(meth)acrylate, 1,6-hexanediol monomethacrylate monoacrylate, 2-phonexyethyl (meth)acrylate, alkoxylated cyclohexanedimethanol di(meth)acrylates, alkoxylated hexanediol di(meth)acrylate, alkoxylated neopentyl glycol di(meth)acrylate, allyl(meth)acrylate, bis[1-(2-(meth)acryloxy)]-p-ethoxyphenyldimethylmethane, bis[1-(3-(meth)acryloxy-2-hydroxy)]-p-propoxyphenyldimethylmethane, caprolactone modified dipentaerythritol hexa(meth)acrylate, caprolactone modified neopentyl glycol hydroxypivalate di(meth)acrylate, cyclohexanedimethanol di(meth)acrylate, diethylene glycol di(meth)acrylate, dipentaerythritol penta(meth)acrylate, dipropylene glycol di(meth)acrylate, ditrimethylolpropane tetra(meth)acrylate, ethoxylated (10) bisphenol A di(meth)acrylate, ethoxylated (20) trimethylolpropane tri(meth)acrylate, ethoxylated (3) bisphenol A di(meth)acrylate, ethoxylated (3) trimethylolpropane tri(meth)acrylate, ethoxylated (30) bisphenol A di(meth)acrylate, ethoxylated (4) bisphenol A di(meth)acrylate, ethoxylated (4) pentaerythritol tetra(meth)acrylate, ethoxylated (6) trimethylolpropane tri(meth)acrylate, ethoxylated (9) trimethylolpropane tri(meth)acrylate, ethoxylated bisphenol A di(meth)acrylate, ethyl (meth)acrylate, ethylene glycol di(meth)acrylate, 2-ethylhexyl (meth)acrylate, glycerol tri(meth)acrylate, hydroxypivalaldehyde modified trimethylolpropane di(meth)acrylate, isobornyl (meth)acrylate, isopropyl (meth)acrylate, methyl (meth)acrylate, neopentyl glycol di(meth)acrylate, n-hexyl (meth)acrylate, pentaerythritol tetra(meth)acrylate, pentaerythritol tri(meth)acrylate, polyethylene glycol (200) di(meth)acrylate, polyethylene glycol (400) di(meth)acrylate, polyethylene glycol (600) di(meth)acrylate, propoxylated (3) glyceryl tri(meth)acrylate, propoxylated (3) trimethylolpropane tri(meth)acrylate, propoxylated (5.5) glyceryl tri(meth)acrylate, propoxylated (6) trimethylolpropane tri(meth)acrylate), propoxylated neopentyl glycol di(meth)acrylate, sorbitol hexa(meth)acrylate, stearyl (meth)acrylate, tetraethylene glycol di(meth)acrylate, tetrahydrofurfuryl (meth)acrylate, tricyclodecanedimethanol di(meth)acrylate, triethylene glycol di(meth)acrylate, trimethylolpropane tri(meth)acrylate, tripropylene glycol di(meth)acrylate, tris(2-hydroxyethyl)isocyanurate tri(meth)acrylate, (meth)acrylamide, N,N-dimethylacrylamide, N-vinylpyrrolidone, N-vinylcaprolactam, methylene bis(meth)acrylamide, diacetone (meth)acrylamide, urethane (meth)acrylates, polyester (meth)acrylates, epoxy (meth)acrylates, copolymerizable mixtures of (meth)acrylated monomers such as those in U.S. Pat. No. 4,652,274 (Boettcher et al.), (meth)acrylated oligomers such as those of U.S. Pat. No. 4,642,126 (Zador et al.), and poly(ethylenically-unsaturated) carbamoyl isocyanurates such as those disclosed in U.S. Pat. No. 4,648,843 (Mitra).

Examples of suitable free-radically polymerizable vinyl compounds include styrene, diallyl phthalate, divinyl succinate, divinyl adipate, and divinyl phthalate. Other suitable free-radically polymerizable compounds include siloxane-functional (meth)acrylates as disclosed, for example, in WIPO International Publication Nos. WO 00/38619 (Guggenberger et al.), WO 01/92271 (Weinmann et al.), WO 01/07444 (Guggenberger et al.), WO 00/42092 (Guggenberger et al.), and fluoropolymer-functional (meth)acrylates as disclosed, for example, in U.S. Pat. Nos. 5,076,844 (Fock et al.), 4,356,296 (Griffith et al.), EP 0 373 384 (Wagenknecht et al.), EP 0 201 031 (Reiners et al.), and EP 0 201 778 (Reiners et al.).

Suitable free-radically polymerizable compounds may contain hydroxyl groups and free-radically active functional groups in a single molecule. Examples of such materials include hydroxyalkyl (meth)acrylates such as 2-hydroxyethyl (meth)acrylate and 2-hydroxypropyl (meth)acrylate, glycerol mono- or di-(meth)acrylate, trimethylolpropane mono- or di-(meth)acrylate, pentaerythritol mono-, di-, and tri-(meth)acrylate, sorbitol mono-, di-, tri-, tetra-, or penta-(meth)acrylate, and 2,2-bis[4-(2-hydroxy-3-methacryloxypropoxy)phenyl]-propane (bisGMA).

Suitable free-radically polymerizable compounds are available from a wide variety of commercial sources such as, for example, Sartomer Co., Exton, Pennsylvania, or can be made by known methods.

Typically, a sufficient quantity of free-radically polymerizable compound(s) is used to provide the desired setting or hardening rate and desired overall properties following curing/hardening. Mixtures of free-radically polymerizable compounds can be used if desired. In some embodiments, free-radically polymerizable compounds are present in the adhesive precursor composition, part A composition, and/or part B composition at a level of at least 50, 60, 70, 80, or even at least 90 percent by weight.

The curable composition comprises a beta-dicarbonyl compound represented by the formula 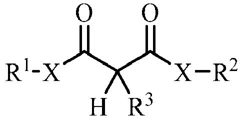 or a salt thereof. Exemplary salts thereof include alkali metal (e.g., Li, Na, K) salts and quaternary ammonium (e.g., tetrabutylammonium, ethyltrimethylammonium, and tetraethylammonium) salts.

In some embodiments, R¹ and R² independently represent a hydrocarbyl group having from 1 to 18 carbon atoms. Exemplary groups R¹ and R² include methyl, ethyl, isopropyl, n-propyl, butyl, pentyl, hexyl, octyl, decyl, dodecyl, hexadecyl, and octadecyl.

In some embodiments, R¹ and R² taken together form a ring. In those embodiments, R¹ and R² taken together may represent, for example, a divalent group selected from hydrocarbylene groups having from 1 to 4, 6, or 8 carbon atoms; a carbonyl group; -O- or -S- (e.g., in the case that; 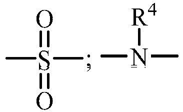 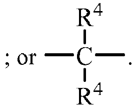 Each R⁴ may independently represent H or an alkyl group having from 1 to 18 carbon atoms. Exemplary groups R⁴ include methyl, ethyl, isopropyl, n-propyl, butyl, pentyl, hexyl, octyl, decyl, dodecyl, hexadecyl, and octadecyl.

R³ represents hydrogen or a hydrocarbyl group having from 1 to 18 carbon atoms. Exemplary groups R³ include methyl, ethyl, isopropyl, n-propyl, butyl, pentyl, hexyl, cyclohexyl, methylcyclohexyl, octyl, decyl, dodecyl, hexadecyl, and octadecyl.

Each X independently represents O, S, 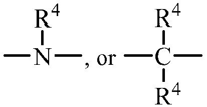 wherein each R⁴ independently represents H or a hydrocarbyl (e.g., alkyl) group having from 1 to 18 carbon atoms. Exemplary groups R⁴ include methyl, ethyl, isopropyl, n-propyl, butyl, pentyl, hexyl, octyl, decyl, dodecyl, hexadecyl, and octadecyl.

In some embodiments, the beta-dicarbonyl compound comprises barbituric acid (i.e., R³ = H, both X = 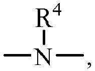 R⁴ =H, and taken together R¹ and R² = carbonyl) or a derivative thereof (e.g., a 1,3-dialkylbarbituric acid). Examples of suitable barbituric acid derivatives include 1,3,5-trimethylbarbituric acid, 1,3,5-triethylbarbituric acid, 1,3-dimethyl-5-ethylbarbituric acid, 1,5-dimethylbarbituric acid, 1-methyl-5-ethylbarbituric acid, 1-methyl-5-propylbarbituric acid, 5-ethylbarbituric acid, 5-propylbarbituric acid, 5-butylbarbituric acid, 1-benzyl-5-phenylbarbituric acid, and 1-cyclohexyl-5-ethylbarbituric acid.

The adhesive precursor composition further comprises 2-nitrobenzoic acid.

Typically, the nitro compound is present in an amount that is effective to extend the shelf life of the adhesive precursor (or part A) composition. Exemplary amounts may range from about 0.1 percent by weight up to about 1, 5, or even 10 percent by weight, based on the total weight of the adhesive precursor (or part A) composition.

Optionally, but preferably, the adhesive precursor (or part A) composition may further comprise one or more organic peroxides (e.g., mono- or multi-functional carboxylic acid peroxyesters), which typically act to decrease the cure time of the composition. Commercially available organic peroxides include, for example, t-alkyl esters of peroxycarboxylic acids, t-alkyl esters of monoperoxydicarboxylic acids, di(t-alkyl) esters of diperoxydicarboxylic acids, alkylene diesters of peroxycarboxylic acids, dialkyl peroxydicarbonates, and OO-t-alkyl O-alkyl diesters of monoperoxycarbonic acid. Exemplary organic peroxides include diisopropyl peroxydicarbonate, t-butyl peroxyneodecanoate, t-amyl peroxyneodecanoate, maleic acid t-butyl monoperoxyester, t-butyl peroxybenzoate, t-butyl peroxy-2-ethylhexanoate, t-amyl peroxy-2-ethylhexanoate, O-isopropyl O,O-t-butyl monoperoxycarbonate, dicyclohexyl peroxycarbonate, dimyristyl peroxycarbonate, dicetyl peroxycarbonate, di(2-ethylhexyl) peroxycarbonate, O,O-t-butyl O-2-ethylhexyl peroxycarbonate, t-butyl peroxy-3,5,5-trimethylhexanoate, t-amyl peroxybenzoate, t-butyl peroxyacetate, di(4-t-butylcyclohexyl) peroxycarbonate, cumyl peroxyneodecanoate, t-amyl peroxypivalate, and t-butyl peroxypivalate.

Typically, the organic peroxide (if present) is present in an effective amount to participate in initiating free-radical polymerization. Exemplary amounts may range from about 0.1 percent by weight up to about 1, 5 percent by weight, based on the total weight of the adhesive precursor (or part A) composition.

In some embodiments, the adhesive precursor (or part A) composition may contain little or no organic peroxide. For example, it may be essentially free of (e.g., contain less than 1 percent by weight of, less than 0.1 percent by weight of, or even contain less than 0.01 percent by weight of) organic peroxide.

The part B composition comprises at least one free-radically polymerizable compound, a salt or oxide of a polyvalent metal, and at least one free-radically polymerizable compound (e.g., as described hereinabove), a salt or oxide of a polyvalent metal, and a non-metallic halide salt.

Suitable salts and oxides of polyvalent metals include soluble ionic salts of the type generally used in oil drying technology. The metals should have several valency states and suitable metal salts are those of multivalent metals, especially transition metals. The metal ions are suitably present in their low valency state. The metal salt should be at least partially soluble in the composition, and may be present in the composition in an effective amount which is generally in a range of between about 1 and about 5000 parts per million (ppm), particularly about 1 to 3000 ppm, and more particularly about 500 to 30000 ppm.

The choice of metal may have a rate-determining effect on initiation of polymerization because of a temperature dependence of the metal component in the process. Iron, cobalt, copper, manganese and vanadium are typically highly active at room temperature. In addition, compounds of these metals can be also be used and/or combined with the foregoing metals mixed with one or more other metallic components such as lead, cerium, calcium, barium, zinc and/or zirconium.

Metal naphthenates or metal acetylacetonates are generally soluble in the composition, but other salts or organometallics may be used if they are sufficiently soluble.

Suitable non-metallic halide salts include, for example, quaternary ammonium halides that are at least partially soluble in that composition. The quaternary ammonium halide may accelerate the free-radical polymerization rate. Suitable quaternary ammonium halides include those having four hydrocarbyl (e.g., alkyl, alkenyl, cycloalkyl, aralkyl, alkaryl, and/or aryl) groups. Preferably, the hydrocarbyl groups are independently selected from hydrocarbyl groups having from 1 to 18 carbon atoms, more preferably 1 to 12 carbon atoms, and more preferably 1 to 4 carbon atoms. Examples of suitable hydrocarbyl groups include methyl, ethyl, propyl, butyl, hexyl, octyl, dodecyl, hexadecyl, and octadecyl, benzyl, phenyl, tolyl, cyclohexyl, and methylcyclohexyl. Exemplary suitable quaternary ammonium compounds include tetramethylammonium halides, tetraethylammonium halides, tetrapropylammonium halides, tetrabutylammonium halides, ethyltrimethylammonium halides, diethyldimethylammonium halides, trimethylbutylammonium halides, and benzyltributylammonium halides. Any halide (e.g., F, Cl, Br, I) ion may be used in the quaternary ammonium halide, but preferably the halide ion is chloride or bromide.

Exemplary total amounts of the non-metallic halide salt(s) may range from about 1 to 5000 parts per million (ppm), preferably from about 1 to 3000 ppm, and more preferably about 500 to 3000 ppm, based on the total weight of the part B composition, although other amounts may also be used.

Adhesive precursor compositions and part A and part B compositions according to the present disclosure may optionally include additives such, as for example, one or more fillers, thickeners, fragrances, hindered amine light stabilizers (HALS), UV stabilizers, inhibitors (e.g., which may accompany free-radically polymerizable compounds), colorants, coating aids, thixatropes, coupling agents, toughening agents, or a combination thereof. Examples of fillers include silica, clays, and surface modified clays. Exemplary toughening agents include elastomeric materials such as various synthetic rubbers (e.g., methyl methacrylate-butadiene-styrene (MBS) copolymers, acrylonitrile-butadiene-styrene (ABS) copolymers, linear polyurethanes, acrylonitrile-butadiene rubbers, styrene-butadiene rubbers, chloroprene rubbers, butadiene rubbers, and natural rubbers. Among them, acrylonitrile-butadiene rubbers are particularly useful because of their typically good solubility in the curable composition. Tougheners may be used alone or in combination.

The part A and part B components are preferably prepared so that they can be mixed at a ratio of 10:1 to 1:10, preferably 7:3 to 3:7, more preferably, 4:1 to 1:4, and more preferable 2:1 to 1:2, and more preferably about 1:1. The components can be mixed together, for example, by conventional techniques such as paddle mixing, propeller mixers, and mixing/dispensing nozzles.

Generally, the two-part adhesive kit will include respective separate containers of part A and part B, although this is not a requirement. In one preferred embodiment, part A and part B are supplied in a single dual-barrel syringe-type dispenser adapted to engage a disposable mixing nozzle.

### EXAMPLES

Unless otherwise noted, all parts, percentages, ratios, etc. in the Examples and the rest of the specification are by weight. Unless otherwise noted, all chemicals used in the examples can be obtained from Sigma-Aldrich Corp., Saint Louis, Missouri. In the Examples, examples with the prefix EX- are working examples and those with the prefix CE- are comparative examples.

**TABLE OF ABBREVIATIONS**

| ABBREVIATION | DESCRIPTION |
|---|---|
| CuDDC | copper dimethyldithiocarbamate, available from Gelest, Inc., Morrisville, Pennsylvania |
| HEMA | 2-hydroxyethyl methacrylate |
| PAM-100 | phosphate-containing acrylate monomer, available as SIPOMER PAM-100 from Solvay-Rhodia, Cranbury, New Jersey |
| PAM-200 | phosphate-containing acrylate monomer, available as SIPOMER PAM-200 from Solvay-Rhodia |
| PAM-300 | phosphate-containing acrylate monomer, available as SIPOMER PAM-300 from Solvay-Rhodia |
| THFMA | tetrahydrofurfuryl methacrylate |

### Preparation of Compositions A-F

Each of compositions A-F was composed of THFMA and an initiator molecule in the amounts indicated in Table 1 (below).

**TABLE 1**

| COMPONENT | COMPOSITION, | | | | | |
|---|---|---|---|---|---|---|
| | parts by weight (pbw) of components | | | | | |
| | A | B | C | D | E | F |
| THFMA | 9.5 | 9.5 | 9.5 | 9.5 | 9.5 | 9.5 |
| 1-benzyl-5-phenyl-barbituric acid | 0.2 | 0 | 0 | 0 | 0 | 0 |
| 2,2,5-trimethyl-1,3-dioxane-4,6-dione | 0 | 0.2 | 0 | 0 | 0 | 0 |
| 2-methyl-1,3-cyclohexanedione | 0 | 0 | 0.2 | 0 | 0 | 0 |
| 3-methylpentane-2,4-dione | 0 | 0 | 0 | 0.2 | 0 | 0 |
| diethyl malonate | 0 | 0 | 0 | 0 | 0.2 | 0 |
| 2-acetylcyclohexanone | 0 | 0 | 0 | 0 | 0 | 0.2 |

### Effect of nitro compound additive on storage stability of a Part A adhesive precursor

For each of Examples EX-1 to EX-11, Composition A (see Table 1) and a nitro compound additive in the parts by weight indicated in Table 2 were mixed in a vial to provide a part A adhesive precursor. For example, EX-1 includes THFMA (9.5 pbw) as an acrylic monomer, 1-benzyl-5-phenylbarbituric acid (0.2 pbw) as an initiator, and 2-nitrobenzoic acid (0.3 pbw) as a nitro compound additive. Similarly, for each of Comparative Examples CE-1 to CE-17, Composition A (i.e., 9.5 pbw THFMA and 0.2 pbw 1-benzyl-5-phenylbarbituric acid) was combined with the indicated additive in the parts by weight shown in Table 2. Each vial and its contents were then stored at either room temperature (∼23°C) or at 50°C until the contents were cured (i.e., unable to flow when the vial was inverted), with the resulting storage stability values summarized in Table 2 (below).

EX-2 to EX-11 are reference examples.

**TABLE 2**

| EXAMPLE | ADDITIVE (pbw) | STORAGE STABILITY AT ∼23 °C, | STORAGE STABILITY AT 50 °C, |
|---|---|---|---|
| | | time to cure | time to cure |
| CE-1 | none | < 1 day | < 1 hour |
| EX-1 | 2-nitrobenzoic acid (0.3) | > 1 month | 6 days |
| EX-2 | 4-nitrobenzoic acid (0.3) | > 1 month | < 2 days |
| EX-3 | 3-nitrobenzoic acid (0.3) | 2 days | < 40 minutes |
| EX-4 | nitrobenzene (0.3) | > 25 days | 24 hours |
| EX-5 | 4-cyanobenzoic acid (0.3) | < 40 minutes | < 40 minutes |
| EX-6 | 3,5-dinitrobenzoic acid (0.3) | > 25 days | > 3 days |
| EX-7 | 3,4-dinitrobenzoic acid (0.3) | > 25 days | 4 hours |
| EX-8 | 2,6-dinitrobenzoic acid (0.3) | >25 days | 1 day |
| EX-9 | 4-chloro-3-nitrobenzoic acid (0.3) | > 25 days | 3 hours |
| EX-10 | 5-chloro-2-nitrobenzoic acid (0.3) | > 25 days | < 40 minutes |
| EX-11 | 3-amino-5-nitrobenzoic acid (0.3) | > 25 days | 3 hours |
| CE-2 | sodium dimethyldithiocarbamate (0.004) | - | 5 days |
| CE-3 | CuDDC (0.004) | < 2 hours | - |
| CE-4 | nitromethane (0.3) | > 25 days | < 1 hour |
| CE-5 | N,N-diethyl-m-toluidine (0.3) | 22 days | 1 day |
| CE-6 | N-N-dimethyl-p-toluidine (0.3) | 1 day | < 1 hour |
| CE-7 | PAM-100 (0.3) | 1 day | < 4 hours |
| CE-8 | PAM-200 (0.3) | 1 day | < 4 hours |
| CE-9 | PAM-300 (0.3) | 1 day | < 1 day |
| CE-10 | phosphoric acid di-n-butyl ester (0.3) | < 4 days | < 2 days |
| CE-11 | phosphoric acid hydroxyethylmethacrylate ester (0.3) | ∼50% cure after 1 day | < 1 day |
| CE-12 | salicylic acid (0.3) | 1 day | < 2.5 hours |
| CE-13 | p-anisic acid (0.3) | < 2 hours | < 1.5 hour |
| CE-14 | trans-cinnamic acid (0.3) | < 2.5 hours | < 1.5 hour |
| CE-15 | benzoic acid (0.3) | 1 hour | < 40 minutes |
| CE-16 | para-toluenesulfonic acid, sodium salt (0.3) | 1 hour | < 40 minutes |

### Effect of nitro compound additive on cure time in a two-part adhesive

A part B composition designated as Composition Δ-1 was prepared using the components and parts by weight listed in Table 3 (below).

**TABLE 3**

| COMPONENT | COMPOSITION Δ-1, parts by weight of components |
|---|---|
| THFMA | 9.5 |
| HEMA | 0.5 |
| Benzyltributylammonium chloride | 0.05 |
| Copper (II) naphthenate, 77% in mineral spirits available from Strem Chemicals, Inc., Newburyport, Massachusetts | 0.02 |

The part B composition Δ-1 of Table 3 was combined in a vial in a 1:1 weight ratio with part B and part A as listed in Table 4. Each vial and its contents were then stored at room temperature (∼23°C) until the contents were cured (i.e., unable to flow when the vial was inverted), with the resulting cure times summarized in Table 4 (below).

**TABLE 4**

| EXAMPLE | PART A | | PART B | CURE TIME FOR 1:1 MIXTURE OF PART A + PART B, minutes |
|---|---|---|---|---|
| | ACRYLATE + INITIATOR | ADDITIVE | | |
| CE-17 | Composition A (9.7 pbw) | None | Composition Δ-1 (9.7 pbw) | 30 |
| EX-12 | Composition A (9.7 pbw) | 2-nitrobenzoic acid (0.3 pbw) | Composition Δ-1 (10 pbw) | 50 |
| CE-18 | Composition A (9.7 pbw) | N,N-diethyl-m-toluidine (0.3 pbw) | Composition Δ-1 (10 pbw) | 20 |
| CE-19 | Composition A (9.7 pbw) | salicylic acid (0.3 pbw) | Composition Δ-1 (10 pbw) | 55 |

### Effect of initiator compounds on cure time in a two-part adhesive, with and without nitro compound additive

Components of each of the part A compositions listed in Table 5 were mixed in a vial to provide an adhesive precursor. Each vial and its contents were then stored at either room temperature (∼23°C) or at 50°C until the contents were cured (i.e., solid and unable to flow when the vial was inverted).

A fresh sample of part A composition listed in Table 5 was combined in a vial in a 1:1 weight ratio with a sample of the part B composition Δ-1 of Table 3. Each vial and its contents was then stored at room temperature (∼23°C) until the contents were cured (i.e., unable to flow when the vial was inverted), and the resulting cure times were summarized in Table 5 (below).

**TABLE 5**

| EXAMPLE | PART A | | STORAGE STABILITY OF PART A AT ∼23°C, time to cure | STORAGE STABILITY OF PART A AT 50°C, time to cure | CURE TIME FOR 1:1 MIXTURE OF PART A + PART B |
|---|---|---|---|---|---|
| | ACRYLATE + INITIATOR | ADDITIVE | | | |
| CE-20 | Composition B | None | > 24 days | < 3 days | 30 minutes |
| EX-13 | Composition B (9.7 pbw) | 2-nitrobenzoic acid (0.3 pbw) | > 24 days | > 24 days | 74 minutes |
| CE-21 | Composition B (9.7 pbw) | N,N-diethyl-m-toluidine (0.3 pbw) | > 24 days | > 24 days | 33 minutes |
| CE-22 | Composition B (9.7 pbw) | salicylic acid (0.3 pbw) | > 24 days | < 3 days | 90 minutes |
| CE-23 | Composition B (9.7 pbw) | sodium dimethyldithiocarbamate (0.004 pbw) | > 24 days | > 24 days | 73 minutes |
| EX-14 | Composition C (9.7 pbw) | 2-nitrobenzoic acid (0.3 pbw) | > 20 days | < 1 day | 80 minutes |
| CE-24 | Composition C | None | < 2 hours | < 1 hour | 15 minutes |
| EX-15 | Composition D (9.7 pbw) | 2-nitrobenzoic acid (0.3 pbw) | >20 days | >20 days | 1.5 days |
| CE-25 | Composition D | None | >20 days | >20 days | 2 days |
| EX-16 | Composition E (9.7 pbw) | 2-nitrobenzoic acid (0.3 pbw) | >20 days | >20 days | Not cured |
| CE-26 | Composition E | None | >20 days | >20 days | Not cured |
| EX-17 | Composition F (9.7 pbw) | 2-nitrobenzoic acid (0.3 pbw) | >20 days | >20 days | 2 days |
| CE-27 | Composition F | None | >20 days | >20 days | 4 days |

## Claims

1. An adhesive precursor composition comprising:
at least one free-radically polymerizable compound;
a beta-dicarbonyl compound represented by the formula 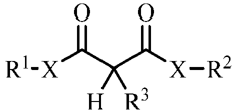 or a salt thereof, wherein:
R¹ and R² independently represent hydrocarbyl or substituted-hydrocarbyl group having from 1 to 18 carbon atoms;
R³ represents hydrogen, or a hydrocarbyl or substituted-hydrocarbyl group having from 1 to 18 carbon atoms; and
each X independently represents O, S, 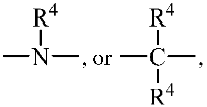
wherein each R⁴ independently represents H or hydrocarbyl having from 1 to 18 carbon atoms, or taken together any two of R¹, R², R³, or R⁴ form a ring; and
2-nitrobenzoic acid.

2. The adhesive precursor composition of claim 1 further comprising at least one organic peroxide.

3. The adhesive precursor composition of claim 1 or 2, wherein the 2-nitrobenzoic acid present in an amount of less than 10 percent by weight based on the total weight of the composition.

4. The adhesive precursor composition of any one of claims 1 to 3, wherein at least one of said at least one beta-dicarbonyl compound is represented by the formula 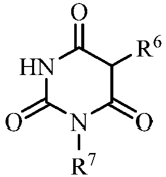 wherein R⁶ and R⁷ are independently selected from the group consisting of H, an alkyl group having 1 to 18 carbon atoms, an aryl group having from 6 to 14 carbon atoms, an alkaryl group having from 7 to 15 carbon atoms, and an aralkyl groups having from 7 to 15 carbon atoms.

5. The adhesive precursor composition of any one of claims 1 to 4, wherein the at least one free-radically polymerizable compound comprises a methacrylate monomer or acrylate monomer.

6. A two-part adhesive kit comprising:
a part A composition comprising:
i) at least one free-radically polymerizable compound;
ii) at least one beta-dicarbonyl compound represented by the formula 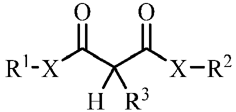 or a salt thereof, wherein:
R¹ and R² independently represent hydrocarbyl or substituted-hydrocarbyl group having from 1 to 18 carbon atoms;
R³ represents hydrogen, or a hydrocarbyl or substituted-hydrocarbyl group having from 1 to 18 carbon atoms; and
each X independently represents O, S, 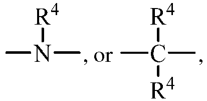
wherein each R⁴ independently represents H or hydrocarbyl having from 1 to 18 carbon atoms, or taken together any two of R¹, R², R³, or R⁴ form a ring; and
iii) 2-nitrobenzoic acid; and
a part B composition comprising:
at least one free-radically polymerizable compound,
at least one salt or oxide of a polyvalent metal, and
at least one non-metallic halide salt.

7. The two-part adhesive kit of claim 6, wherein the part A composition further comprises at least one organic peroxide.

8. The two-part adhesive kit of claim 6 or 7, wherein the 2-nitrobenzoic acid is present in an amount of less than 10 percent by weight based on the total weight of the part A composition.

9. The two-part adhesive kit of any one of claims 6 to 8, wherein at least one of said at least one beta-dicarbonyl compound is represented by the formula 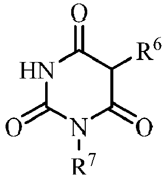 wherein R⁶ and R⁷ are independently selected from the group consisting of H, an alkyl group having 1 to 18 carbon atoms, an aryl group having from 6 to 14 carbon atoms, an alkaryl group having from 7 to 15 carbon atoms, and an aralkyl group having from 7 to 15 carbon atoms.

10. The two-part adhesive kit of any one of claims 6 to 9, wherein said at least one free-radically polymerizable compound comprises a methacrylate monomer or acrylate monomer.

11. A method of making an adhesive composition, the method comprising combining the part A and part B compositions of the two-part adhesive kit of any one of claims 6 to 10.

## Patentansprüche

1. Eine Klebstoffvorläuferzusammensetzung, umfassend:
mindestens eine radikalisch polymerisierbare Verbindung;
eine beta-Dicarbonylverbindung, dargestellt durch die Formel 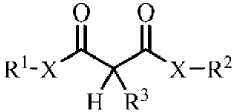
oder ein Salz davon, worin:
R¹ und R² unabhängig voneinander für Hydrocarbyl oder eine substituierte Hydrocarbylgruppe mit 1 bis 18 Kohlenstoffatomen stehen;
R³ für Wasserstoff oder eine Hydrocarbyl- oder substituierte Hydrocarbylgruppe mit 1 bis 18 Kohlenstoffatomen steht; und
jedes X unabhängig voneinander für O, S, 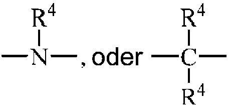 steht,
worin jedes R⁴ unabhängig für H oder Hydrocarbyl mit 1 bis 18 Kohlenstoffatomen steht oder zusammengenommen beliebige zwei von R¹, R², R³ oder R⁴ einen Ring bilden; und
2-Nitrobenzoesäure.

2. Die Klebstoffvorläuferzusammensetzung nach Anspruch 1, die ferner mindestens ein organisches Peroxid umfasst.

3. Die Klebstoffvorläuferzusammensetzung nach Anspruch 1 oder 2, wobei die 2-Nitrobenzoesäure in einer Menge von weniger als 10 Gew.-%, bezogen auf das Gesamtgewicht der Zusammensetzung, vorhanden ist.

4. Die Klebstoffvorläuferzusammensetzung nach einem der Ansprüche 1 bis 3, wobei mindestens eine der mindestens einen beta-Dicarbonylverbindung dargestellt ist durch die Formel 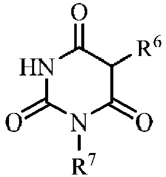 worin R⁶ und R⁷ unabhängig voneinander aus der Gruppe bestehend aus H, einer Alkylgruppe mit 1 bis 18 Kohlenstoffatomen, einer Arylgruppe mit 6 bis 14 Kohlenstoffatomen, einer Alkarylgruppe mit 7 bis 15 Kohlenstoffatomen und einer Aralkylgruppe mit 7 bis 15 Kohlenstoffatomen ausgewählt ist.

5. Die Klebstoffvorläuferzusammensetzung nach einem der Ansprüche 1 bis 4, wobei mindestens eine radikalisch polymerisierbare Verbindung ein Methacrylatmonomer oder Acrylatmonomer umfasst.

6. Ein zweiteiliges Klebstoff-Kit, umfassend:
eine Teil A-Zusammensetzung, umfassend:
i) mindestens eine radikalisch polymerisierbare Verbindung;
ii) mindestens eine beta-Dicarbonylverbindung, dargestellt durch die Formel 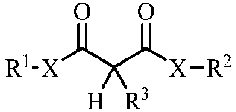
oder ein Salz davon, worin:
R¹ und R² unabhängig voneinander für Hydrocarbyl oder eine substituierte Hydrocarbylgruppe mit 1 bis 18 Kohlenstoffatomen stehen;
R³ für Wasserstoff oder eine Hydrocarbyl- oder eine substituierte Hydrocarbylgruppe mit 1 bis 18 Kohlenstoffatomen steht; und
jedes X unabhängig voneinander für O, S, 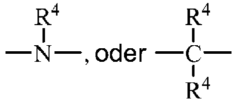 steht,
worin jedes R⁴ unabhängig für H oder Hydrocarbyl mit 1 bis 18 Kohlenstoffatomen steht oder zusammengenommen beliebige zwei von R¹, R², R³ oder R⁴ einen Ring bilden; und
iii) 2-Nitrobenzoesäure; und
eine Teil-B-Zusammensetzung, umfassend:
mindestens eine radikalisch polymerisierbare Verbindung,
mindestens ein Salz oder Oxid eines mehrwertigen Metalls und
mindestens ein nichtmetallisches Halogenidsalz.

7. Das zweiteilige Klebstoff-Kit nach Anspruch 6, wobei die Teil-A-Zusammensetzung ferner mindestens ein organisches Peroxid umfasst.

8. Das zweiteilige Klebstoff-Kit nach Anspruch 6 oder 7, wobei die 2-Nitrobenzoesäure in einer Menge von weniger als 10 Gew.-%, bezogen auf das Gesamtgewicht der Teil-A-Zusammensetzung, vorhanden ist.

9. Das zweiteilige Klebstoff-Kit nach einem der Ansprüche 6 bis 8, wobei mindestens eine der mindestens einen beta-Dicarbonylverbindung dargestellt wird durch die Formel 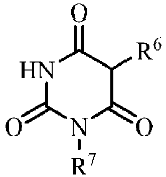 worin R⁶ und R⁷ unabhängig voneinander aus der Gruppe bestehend aus H, einer Alkylgruppe mit 1 bis 18 Kohlenstoffatomen, einer Arylgruppe mit 6 bis 14 Kohlenstoffatomen, einer Alkarylgruppe mit 7 bis 15 Kohlenstoffatomen und einer Aralkylgruppe mit 7 bis 15 Kohlenstoffatomen ausgewählt ist.

10. Das zweiteilige Klebstoff-Kit nach einem der Ansprüche 6 bis 9, wobei die mindestens eine radikalisch polymerisierbare Verbindung ein Methacrylatmonomer oder Acrylatmonomer umfasst.

11. Ein Verfahren zur Herstellung einer Klebstoffzusammensetzung, wobei das Verfahren das Kombinieren der Teil-A- und Teil-B-Zusammensetzungen des zweiteiligen Klebstoff-Kits nach einem der Ansprüche 6 bis 10 umfasst.

## Revendications

1. Composition de précurseur d'adhésif comprenant :
au moins un composé polymérisable par radicaux libres ;
un composé bêta-dicarbonyle représenté par la formule 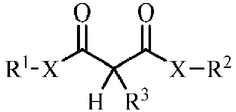
ou un sel de celui-ci, dans lequel :
R¹ et R² représentent indépendamment un groupe hydrocarbyle ou hydrocarbyle substitué ayant de 1 à 18 atomes de carbone ;
R³ représente l'hydrogène, ou un groupe hydrocarbyle ou hydrocarbyle substitué ayant de 1 à 18 atomes de carbone ; et
chaque X représente indépendamment O, S, 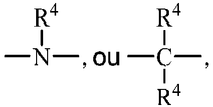
dans laquelle chaque R⁴ représente indépendamment H ou un hydrocarbyle ayant de 1 à 18 atomes de carbone, ou pris ensemble n'importe quels R¹, R², R³ ou R⁴ au nombre de deux forment un cycle ; et
de l'acide 2-nitrobenzoïque.

2. Composition de précurseur d'adhésif selon la revendication 1 comprenant en outre au moins un peroxyde organique.

3. Composition de précurseur d'adhésif selon la revendication 1 ou 2, dans laquelle l'acide 2-nitrobenzoïque est présent en une quantité inférieure à 10 pour cent en poids sur la base du poids total de la composition.

4. Composition de précurseur d'adhésif selon l'une quelconque des revendications 1 à 3, dans laquelle au moins l'un parmi ledit au moins un composé bêta-dicarbonyle est représenté par la formule 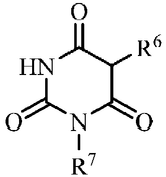 dans laquelle R⁶ et R⁷ sont indépendamment choisis dans le groupe constitué de H, un groupe alkyle ayant 1 à 18 atomes de carbone, un groupe aryle ayant de 6 à 14 atomes de carbone, un groupe alkaryle ayant de 7 à 15 atomes de carbone, et des groupes aralkyle ayant de 7 à 15 atomes de carbone.

5. Composition de précurseur d'adhésif selon l'une quelconque des revendications 1 à 4, dans laquelle l'au moins un composé polymérisable par radicaux libres comprend un monomère de méthacrylate ou un monomère d'acrylate.

6. Trousse d'adhésif à deux parties comprenant :
une composition de partie A comprenant :
i) au moins un composé polymérisable par radicaux libres ;
ii) au moins un composé bêta-dicarbonyle représenté par la formule 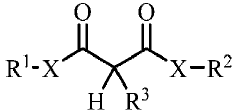
ou un sel de celui-ci, dans lequel :
R¹ et R² représentent indépendamment un groupe hydrocarbyle ou hydrocarbyle substitué ayant de 1 à 18 atomes de carbone ;
R³ représente l'hydrogène, ou un groupe hydrocarbyle ou hydrocarbyle substitué ayant de 1 à 18 atomes de carbone ; et
chaque X représente indépendamment O, S, 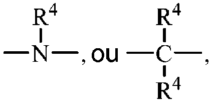
dans laquelle chaque R⁴ représente indépendamment H ou un hydrocarbyle ayant de 1 à 18 atomes de carbone, ou pris ensemble n'importe quels R¹, R², R³, ou R⁴ au nombre de deux forment un cycle ; et
iii) de l'acide 2-nitrobenzoïque ; et
une composition de partie B comprenant :
au moins un composé polymérisable par radicaux libres,
au moins un sel ou oxyde d'un métal polyvalent, et
au moins un sel halogénure non métallique.

7. Trousse d'adhésif à deux parties selon la revendication 6, dans laquelle la composition de partie A comprend en outre au moins un peroxyde organique.

8. Trousse d'adhésif à deux parties selon la revendication 6 ou 7, dans laquelle l'acide 2-nitrobenzoïque est présent en une quantité inférieure à 10 pour cent en poids sur la base du poids total de la composition de partie A.

9. Trousse d'adhésif à deux parties selon l'une quelconque des revendications 6 à 8, dans laquelle au moins l'un parmi ledit au moins un composé bêta-dicarbonyle est représenté par la formule 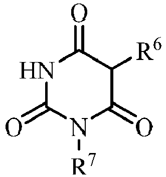 dans laquelle R⁶ et R⁷ sont indépendamment choisis dans le groupe constitué de H, un groupe alkyle ayant 1 à 18 atomes de carbone, un groupe aryle ayant de 6 à 14 atomes de carbone, un groupe alkaryle ayant de 7 à 15 atomes de carbone, et un groupe aralkyle ayant de 7 à 15 atomes de carbone.

10. Trousse d'adhésif à deux parties selon l'une quelconque des revendications 6 à 9, dans laquelle ledit au moins un composé polymérisable par radicaux libres comprend un monomère de méthacrylate ou un monomère d'acrylate.

11. Procédé de fabrication d'une composition d'adhésif, le procédé comprenant la combinaison des compositions de partie A et de partie B de la trousse d'adhésif à deux parties selon l'une quelconque des revendications 6 à 10.
